(19) Europäisches Patentamt / European Patent Office / Office européen des brevets

(11) **EP 4 398 437 A1**

(12) **EUROPEAN PATENT APPLICATION**
published in accordance with Art. 153(4) EPC

(43) Date of publication:
**10.07.2024 Bulletin 2024/28**

(21) Application number: **22863912.6**

(22) Date of filing: **23.03.2022**

(51) International Patent Classification (IPC):
**H02J 3/38** (2006.01)     **H02M 7/48** (2007.01)

(52) Cooperative Patent Classification (CPC):
**H02J 3/38; H02M 7/48**

(86) International application number:
**PCT/JP2022/013579**

(87) International publication number:
**WO 2023/032322 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.09.2021 JP 2021144355**

(71) Applicant: **OMRON Corporation
Kyoto 600-8530 (JP)**

(72) Inventor: **UEMATSU, Takeshi
Kyoto-shi, Kyoto 600-8530 (JP)**

(74) Representative: **Isarpatent
Patent- und Rechtsanwälte
Barth Hassa Peckmann & Partner mbB
Friedrichstraße 31
80801 München (DE)**

(54) **POWER CONVERSION APPARATUS**

(57) A power conversion device that converts input power into AC power and outputs the converted power, the power conversion device including: an active and reactive output current calculator configured to calculate an active output current value and a reactive output current value based on a detected output current value; an active and reactive output voltage value calculator configured to calculate an active output voltage value and a reactive output voltage value based on a detected output voltage value; a reactive output voltage controller configured to adjust a reactive output voltage target value based on an active output current target value, the active output current value, and the reactive output voltage value; and an active output voltage controller configured to adjust an active output voltage target value based on a reactive output current target value, the reactive output current value, and the active output voltage value.

Fig. 4

EP 4 398 437 A1

**Description**

TECHNICAL FIELD

The present invention relates to a power conversion device that is connected to a commercial power system and is capable of self-sustaining operation.

BACKGROUND ART

Conventionally, there has been proposed a system that is connected to a commercial power system and operates a plurality of distributed power supplies such as storage batteries and solar cells in parallel by a plurality of power conversion devices at the time of self-sustaining operation.

In such a system, since the parallel operation control is performed according to frequency drooping by active power, the frequency changes according to output power. Therefore, a problem occurs in a load whose operation frequency range is limited to a specific frequency range (See, for example, Patent Document 1).

PRIOR ART DOCUMENTS

PATENT DOCUMENTS

Patent Document 1: Japanese Patent No. 6809753

SUMMARY OF THE INVENTION

PROBLEMS TO BE SOLVED BY THE INVENTION

The present invention has been made in view of the above problems, and an object of the present invention is to provide a power conversion device capable of stably supplying power during an interconnection operation and during a self-sustaining operation.

MEANS FOR SOLVING THE PROBLEM

The present invention for solving the above problems is a power conversion device that converts input power into single-phase or three-phase AC power and outputs the converted power, the power conversion device including:

an active and reactive output current calculator configured to calculate an active output current value and a reactive output current value based on an output current value detected by a current detector;
an active and reactive output voltage value calculator configured to calculate an active output voltage value and a reactive output voltage value based on an output voltage value detected by a voltage detector;
a reactive output voltage controller configured to adjust a reactive output voltage target value based on an active output current target value, the active output current value, and the reactive output voltage value; and
an active output voltage controller configured to adjust an active output voltage target value based on a reactive output current target value, the reactive output current value, and the active output voltage value.

According to this, the output voltage target value is adjusted based on the detected output current value and the output current target value, and the output power of the single phase or the three phases can be controlled by an output voltage command value generated based on the output voltage target value thus adjusted. By appropriately setting the output current target value and the output voltage target value during the interconnection operation and the self-sustaining operation including a parallel operation of a plurality of devices, the output power can be controlled, so that stable power supply can be performed. Furthermore, since a control system can be shared between the interconnection operation and the self-sustaining operation, it is sufficient to change the setting of the target value at the time of transition between the interconnection operation and the self-sustaining operation, and it is not necessary to switch the control system itself, so that switching can be performed without instantaneous interruption.

The power conversion device of the present invention may be a device having a function of converting DC power input from a storage battery, a PV panel, or the like into single-phase or three-phase AC power, or may be a device configured as an uninterruptible power supply (UPS).

Furthermore, in the present invention, at least one of the active output current target value and the reactive output current target value may be changed between an interconnection operation in which the power conversion device is operated in connection with a commercial power system and a self-sustaining operation in which the power conversion device is operated in separation from the commercial power system.

As described above, by changing at least one of the active output current target value and the reactive output current target value, it is possible to stably supply power according to an operation state of the power conversion device. For example, the active output current target value and the reactive output current target value can be set to 0 during the self-sustaining operation, and can be set to appropriate values by the output current during the interconnection operation. As described above, by setting the active output current target value and the reactive output current target value to 0 during the self-sustaining operation, in a case where a plurality of the power conversion devices are operated in parallel, it is possible to suppress a cross current caused by imbalance between the power conversion devices. Furthermore, an appropriate value other than 0 may be set according to the balance of the power conversion devices.

Furthermore, in the present invention, at least one of the active output voltage target value and the reactive output voltage target value may be changed between an interconnection operation in which the power conversion device is operated in connection with a commercial power system and a self-sustaining operation in which the power conversion device is operated in separation from the commercial power system.

As described above, by changing at least one of the active output voltage target value and the reactive output voltage target value, it is possible to stably supply power according to an operation state of the power conversion device. For example, a voltage value of the commercial power system may be set as the active output voltage target value and the reactive output voltage target value during the interconnection operation, and an output voltage value for self-running may be set.

Furthermore, in the present invention, an output impedance controller configured to control an output impedance when the power is output may be provided.

In this manner, the output impedance can be controlled to stabilize the system. Furthermore, by adjusting the output impedance by control, it is not necessary to change a component in order to change the impedance, so that the cost and size can be suppressed.

Furthermore, in the present invention,

a current rotational coordinate transformer configured to perform rotational coordinate transformation on the output current value to calculate the active output current value and the reactive output current value, and
a voltage rotational coordinate transformer configured to perform rotational coordinate transformation on the output voltage value to calculate the active output voltage value and the reactive output voltage value
may be provided.

As described above, the active output current value and the reactive output current value can be calculated from the detected output current value by the rotational coordinate transformation, and the active output voltage value and the reactive output voltage value can be calculated from the detected output voltage value. For example, in the case of a three-phase power conversion device, a three-phase current or a three-phase voltage can be converted into a two-phase current or a two-phase voltage by $\alpha\beta$ conversion, and then dq transformation that is rotational coordinate transformation can be applied. Furthermore, for example, in the case of a single-phase power conversion device, a single-phase voltage or a single-phase current can be made two-dimensional by Hilbert transform, and then dq conversion, which is rotational coordinate transformation, can be applied.

EFFECT OF THE INVENTION

According to the present invention, it is possible to provide a power conversion device capable of stably supplying power during an interconnection operation and during a self-sustaining operation.

BRIEF DESCRIPTION OF THE DRAWINGS

Fig. 1 is a diagram illustrating a schematic configuration of a power conditioner according to an example of the present invention.
Fig. 2 is a diagram illustrating another schematic configuration of the power conditioner according to an example of the present invention.
Fig. 3 is a diagram illustrating an inverter model according to an example of the present invention.
Fig. 4 is a diagram illustrating a control system of current feedback control according to an example of the present invention.
Fig. 5 is a diagram illustrating a control system including virtual impedance control according to an example of the present invention.

Fig. 6 is a diagram illustrating a control system of virtual impedance control according to an example of the present invention.

Fig. 7 is a diagram illustrating a simulation result of the virtual impedance control according to an example of the present invention.

Fig. 8 is a diagram illustrating a simulation result of the virtual impedance control according to an example of the present invention.

Fig. 9 is a diagram illustrating another simulation result of the virtual impedance control according to the example of the present invention.

Fig. 10 is a diagram illustrating another simulation result of the virtual impedance control according to the example of the present invention.

MODE FOR CARRYING OUT THE INVENTION

[Application examples]

Hereinafter, application examples of the present invention will be described with reference to the drawings.

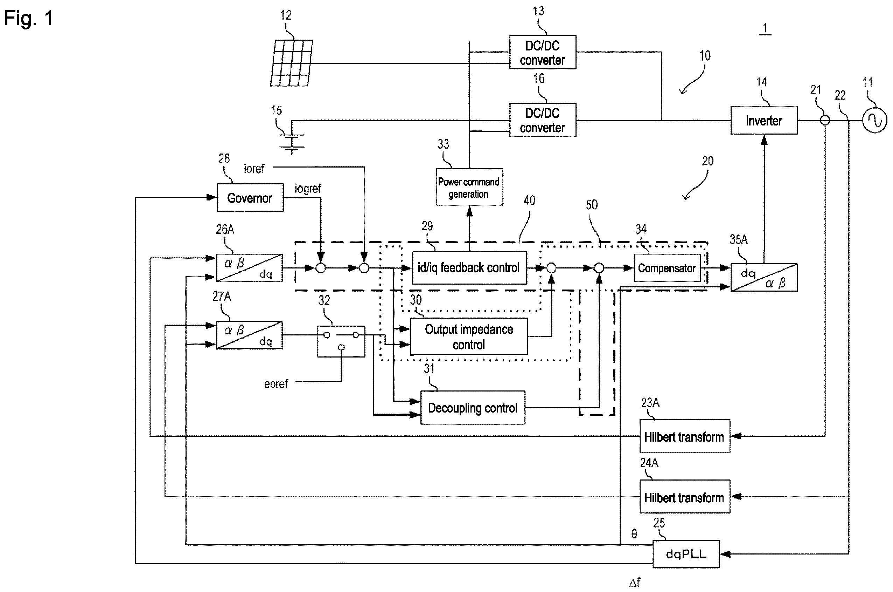

Fig. 1 is a diagram illustrating a schematic configuration of a power conditioner 1 according to an application example of the present invention.

A main circuit 10 of the power conditioner 1 includes a DC/DC converter 13 connected to a PV panel 12, a DC/DC converter 16 connected to a storage battery 15, and an inverter 14, and can operate in connection with a commercial power system 11.

A controller 20 includes a Hilbert transformer 23A, a Hilbert transformer 24A, dqPLL 25, an $\alpha\beta$/dq converter 26A, an $\alpha\beta$/dq converter 27A, a governor 28, an id/iq feedback controller 29, an output impedance controller 30, a decoupling controller 31, a switch 32, a power command generator 33, a compensator 34, and a dq/$\alpha\beta$ converter 35A.

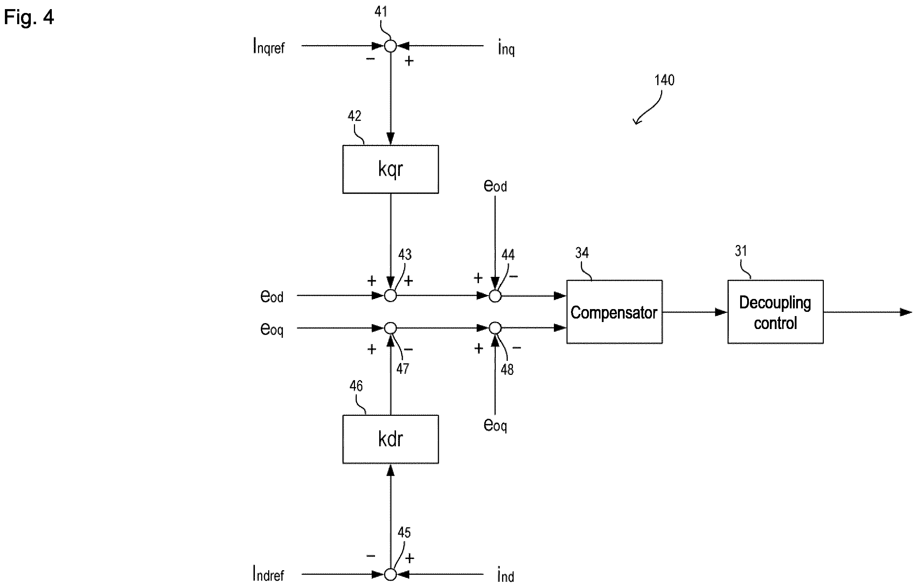

A control system 140 for current feedback control implemented by a configuration included in a region 40 indicated by a broken line of the power conditioner 1 is illustrated in Fig. 4.

Here, a d-axis output voltage $e_{od}$ is adjusted by a current loop including a q-axis inverter output current $i_{nq}$ and a q-axis output current target value $I_{nqref}$, and a q-axis output voltage $e_{oq}$ is adjusted by a current loop including a d-axis inverter output current $i_{nd}$ and a d-axis output current target value $I_{ndref}$. By using such a control system 140, a control system of the parallel operation control of the power conditioner during the self-sustaining operation and a control system of the current control during the interconnection operation can be shared in the power conditioner 1. As a result, since the control can be switched from the interconnection operation to the self-sustaining operation in an uninterrupted manner, stable power supply can be performed without distinction between the self-sustaining operation and the interconnection operation. Furthermore, since the output current target value of the d-axis and q-axis can be set, the cross current generally set to 0 during the parallel operation can be controlled to an arbitrary value. Furthermore, the power conditioner 1 performs parallel operation control by the current feedback control without drooping control by a frequency, so that the frequency does not change.

[Example 1]

Hereinafter, the power conditioner 1 according to Example 1 of the present invention will be described in more detail with reference to the drawings. However, the configurations of the device and the system described in this example should be appropriately changed according to various conditions. In other words, the scope of the present invention is not intended to be limited to the following example.

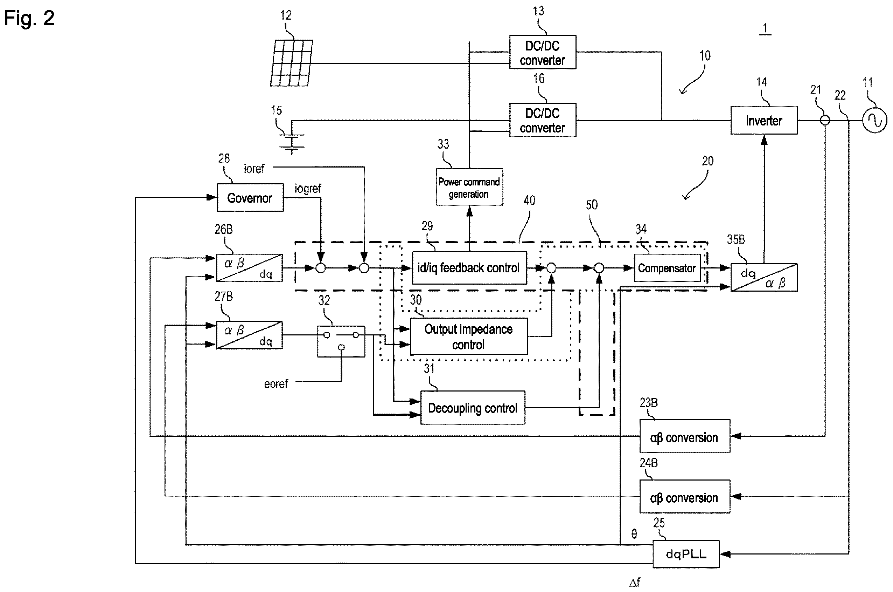

Figs. 1 and 2 are diagrams illustrating schematic configurations of the main circuit 10 and the controller 20 of the power conditioner 1 according to Example 1 of the present invention. The power conditioner 1 has a function of converting power input from the PV panel 12 or the storage battery 15 into single-phase AC power or three-phase AC power and outputting the single-phase AC power or the three-phase AC power, and Figs. 1 and 2 are diagrams illustrating a case where the single-phase AC power and the three-phase AC power are output. Hereinafter, different configurations between the case where the single-phase AC power is output from the power conditioner 1 and the case where the three-phase AC power is output from the power conditioner 1 will be described with reference to Figs. 1 and 2, respectively, and common configurations will be described without distinguishing between Figs. 1 and 2.

A main circuit 10 of the power conditioner 1 includes a DC/DC converter 13 connected to a PV panel 12, a DC/DC converter 16 connected to a storage battery 15, and an inverter 14, and can operate in connection with a commercial power system 11.

The DC/DC converter 13 converts the voltage of DC power generated by the PV panel 12, and outputs the converted voltage to the inverter 14. The DC/DC converter 16 converts the voltage of power discharged from the storage battery 15 and outputs the converted voltage to the inverter 14. Furthermore, the DC/DC converter 16 converts the voltage of the input DC power to charge the storage battery 15. The inverter 14 converts DC power input from the DC/DC converter 13 and/or the DC/DC converter 16 into AC power, and outputs the AC power to the commercial power system 11 and/or a load.

As illustrated in Fig. 1, the controller 20 includes the Hilbert transformer 23A, the Hilbert transformer 24A, the dqPLL 25, the $\alpha\beta$/dq converter 26A, the $\alpha\beta$/dq converter 27A, the governor 28, the id/iq feedback controller 29, the output impedance controller 30, the decoupling controller 31, the switch 32, the power command generator 33, the compensator 34, and the dq/$\alpha\beta$ converter 35A. The controller can include a computer including a central processing unit (CPU) and a memory, a digital signal processor (DSP), an application specific integrated circuit (ASIC), and the like. Some or all of the functions of the respective units may be realized by executing software in hardware, or may be realized by dedicated hardware.

The controller 20 illustrated in Fig. 2 includes an $\alpha\beta$ converter 23B, an $\alpha\beta$ converter 24B, a dqPLL 25, an $\alpha\beta$/dq converter 26B, an $\alpha\beta$/dq converter 27B, a governor 28, an id/iq feedback controller 29, an output impedance controller 30, a decoupling controller 31, a switch 32, a power command generator 33, a compensator 34, and a dq/$\alpha\beta$ converter 35B.

First, a case where the single-phase AC power is output from the inverter 14 will be described with reference to Fig. 1. An output current value detected by a current detector 21 provided on an output side of the inverter 14 is subjected to Hilbert transform in the Hilbert transformer 23A. The output current value of the single-phase current converted into a two-dimensional vector by the Hilbert transform in the Hilbert transformer 23A is output to the $\alpha\beta$/dq converter 26A.

Next, a case where the three-phase AC power is output from the inverter 14 will be described with reference to Fig. 2. In this case, the controller 20 includes the $\alpha\beta$ converter 23B that converts the three-phase AC power into two-phase AC power, instead of Hilbert transformer 23A. Then, the output current value of the three-phase current detected by the current detector 21 is converted into a two-dimensional vector by $\alpha\beta$ conversion in the $\alpha\beta$ converter 23B, and is output to the $\alpha\beta$/dq converter 26B.

First, a case where the single-phase AC power is output from the inverter 14 will be described with reference to Fig. 1. An output voltage value detected by a voltage detector 22 provided on the output side of the inverter 14 is subjected to Hilbert transform in the Hilbert transformer 24A.

The output voltage value of the single-phase voltage converted into a two-dimensional vector by the Hilbert transform in the Hilbert transformer 24A is output to the $\alpha\beta$/dq converter 27A.

Next, a case where the three-phase AC power is output from the inverter 14 will be described with reference to Fig. 2. In this case, the controller 20 includes the $\alpha\beta$ converter 24B that converts the three-phase voltage into a two-phase voltage, instead of Hilbert transformer 24A. Then, the output voltage value detected by the voltage detector 22 is converted into a two-dimensional vector by $\alpha\beta$ conversion in the $\alpha\beta$ converter 24B, and is output to the $\alpha\beta$/dq converter 27B.

Furthermore, the output voltage value detected by the voltage detector 22 is input to the dqPLL 25. The dqPLL 25 is a dq-based phase lock loop (PLL). The dqPLL 25 calculates a phase $\theta$ of the output voltage from the output voltage value and calculates a frequency change amount $\Delta f$ of the output voltage. The phase $\theta$ calculated in the dqPLL 25 is output to the $\alpha\beta$/dq converter 26A(B) (The $\alpha\beta$/dq converter 26A and the $\alpha\beta$/dq converter 26B are abbreviated in this way instead of being described respectively. The same applies below), the $\alpha\beta$/dq converter 27A(B), and the dq/$\alpha\beta$ converter 35A(B), and the frequency change amount $\Delta f$ is output to the governor 28.

First, a case where the single-phase AC power is output from the inverter 14 will be described with reference to Fig. 1. When the output current value converted into the two-dimensional vector is input from the Hilbert transformer 23A, the $\alpha\beta$/dq converter 26A converts the output current value into an output current value in a dq coordinate system that is a rotational coordinate system by dq conversion. The q-axis corresponds to an active component (here, an active output current value), and the d-axis corresponds to a reactive component (here, a reactive output current value). At this time, the phase $\theta$ input from the dqPLL 25 is used for the dq conversion. Here, the dq conversion corresponds to rotational coordinate transformation, and the $\alpha\beta$/dq converter 26A corresponds to a current rotational coordinate transformer. The Hilbert transformer 23A and the $\alpha\beta$/dq converter 26A correspond to an active and reactive output current calculator of the present invention.

Next, a case where the three-phase AC power is output from the inverter 14 will be described with reference to Fig. 2. In this case, when the output current value obtained by converting the three-phase current value detected by the current detector 21 into the two-phase current value is input from the $\alpha\beta$ converter 23B, the $\alpha\beta$/dq converter 26B converts the three-phase current value into the output current value in the dq coordinate system by dq conversion. Here, the dq conversion corresponds to rotational coordinate transformation, and the $\alpha\beta$/dq converter 26B corresponds to a current rotational coordinate transformer. The $\alpha\beta$ converter 23B and the $\alpha\beta$/dq converter 26B correspond to an active and reactive output current calculator of the present invention.

First, a case where the single-phase AC power is output from the inverter 14 will be described with reference to Fig. 1. When the output voltage value converted into the two-dimensional vector is input from the Hilbert transformer

24A, the αβ/dq converter 27A converts the output voltage value into an output voltage value in a dq coordinate system that is a rotational coordinate system by dq conversion. The q-axis corresponds to an active component (here, an active output voltage value), and the d-axis corresponds to a reactive component (here, a reactive output voltage value). At this time, the phase θ input from the dqPLL 25 is used for the dq conversion. Here, the dq conversion corresponds to the rotational coordinate transformation of the present invention, and the αβ/dq converter 27A corresponds to a voltage rotational coordinate transformer of the present invention. The Hilbert transformer 24A and the αβ/dq converter 27A correspond to an active and reactive output voltage value calculator of the present invention.

Next, a case where the three-phase AC power is output from the inverter 14 will be described with reference to Fig. 2. In this case, when the output voltage value obtained by converting the three-phase voltage value detected by the voltage detector into the two-phase voltage value is input from the αβ converter 24B, the αβ/dq converter 27B converts the three-phase voltage value into the output voltage value in the dq coordinate system by dq conversion. The q-axis corresponds to an active component (here, an active output voltage value), and the d-axis corresponds to a reactive component (here, a reactive output voltage value). At this time, the phase θ input from the dqPLL 25 is used for the dq conversion. Here, the dq conversion corresponds to the rotational coordinate transformation of the present invention, and the αβ/dq converter 27B corresponds to the voltage rotational coordinate transformer of the present invention. The αβ converter 24B and the αβ/dq converter 27B correspond to an active and reactive output voltage value calculator of the present invention.

The governor 28 performs governor control to increase/decrease the output power of the inverter 14 in a case where the frequency decreases/increases due to the frequency change amount Δf detected by the dqPLL 25.

The id/iq feedback controller 29 performs id/iq current feedback control described later.

The output impedance controller 30 performs output impedance control described later.

The decoupling controller 31 decouples the d-axis component and the q-axis component by decoupling by feedforward control.

Since the power command generator 33 can calculate the power consumption from the commercial power system 11, the power command generator generates a command related to the power to be output from the DC/DC converter 13 and the DC/DC converter 16, and outputs the command to the DC/DC converter 13 and the DC/DC converter 16.

In a case where the power conditioner 1 is operated in connection with the commercial power system, the switch 32 connects the αβ/dq converter 27A(B) to inputs of the output impedance controller 30 and the decoupling controller 31. Furthermore, in a case where the power conditioner 1 is disconnected from the commercial power system and operated self-sustaining, the switch 32 is switched, and a set output voltage target value is input to the output impedance controller 30 and the decoupling controller 31.

First, a case where the single-phase AC power is output from the inverter 14 will be described with reference to Fig. 1. The compensator 34 and the dq/αβ converter 35A constitute an inverter controller. The compensator 34 generates an output voltage command in the dq coordinate system, and the dq/αβ converter 35A performs reverse conversion to a single-phase voltage value using the phase θ input from the dqPLL 25 and outputs the voltage value to the inverter 14.

Next, a case where the three-phase AC power is output from the inverter 14 will be described with reference to Fig. 2. The compensator 34 and the dq/αβ converter 35B constitute an inverter controller. The compensator 34 generates an output voltage command in the dq coordinate system, and the dq/αβ converter 35B performs inverse conversion into a three-phase voltage value using the phase θ input from the dqPLL 25 and outputs the voltage value to the inverter 14.

(id/dq current feedback control)

The current feedback control realized by the configuration included in the region 40 indicated by the broken line including the id/dq feedback controller 29 in Fig. 1 will be described.

Conventionally, regarding control during a parallel operation of a power conditioner, since output active power can be controlled by a phase difference and reactive power can be controlled by an amplitude, parallel operation control has been realized by frequency drooping by the active power and amplitude drooping by the reactive power.

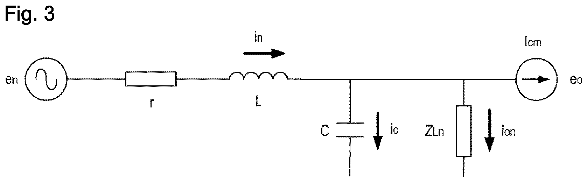

Fig. 3 is a model representing an inverter per inverter in a system in which N inverters are operated in parallel. $e_n$ represents a voltage of the inverter, r represents a resistance, L represents an inductance, $i_n$ represents an output current of the inverter, C represents a capacitor, $i_c$ represents a current flowing through the capacitor, $e_o$ represents an output voltage, and $i_{cm}$ represents a cross current. $Z_{LN}$ is a value obtained by converting a load $Z_L$ of all the systems per one system, and is expressed as Mathematical formula 1.

[Mathematical formula 1]

$$Z_{LN} = N \cdot Z_L$$

Here, when a current flowing through $Z_L$ is represented by $i_o$, the following Mathematical formula 2 is obtained.

[Mathematical formula 2]

$$i_{on} = \frac{i_o}{N}$$

Then, $i_n$ is given by the following Mathematical formula 3.

[Mathematical formula 3]

$$i_n = \frac{i_o}{N} + i_{crn}$$

That is, the inverter output current $i_n$ is the sum of the current $i_{on}$ flowing through the load and the cross current $i_{crn}$.

At this time, since the cross current $i_{crn}$ has the inductance L, for $e_n$,

an active current of $i_{crn}$ is a reactive voltage component of $e_n$, and
a reactive current of $i_{crn}$ is an active voltage component of $e_n$. Therefore, it is conceivable that the active current of the inverter output current may be detected to droop the reactive voltage (q-axis), and the reactive current may be detected to droop the active voltage (d-axis).

In other words, the parallel operation of the inverters is equivalent to the parallel operation of the commercial power system and the power conditioner. Therefore, the parallel operation control of the inverter can be performed with the same scheme to realize the interconnection operation control of the power conditioner. For example, the control system 140 illustrated in Fig. 4 can be considered as a control system that sets an output current target value in the above-described drooping control by the active current and the reactive current and forms a feedback loop.

A q-axis output current target value $I_{nqref}$ is subtracted from a q-axis inverter output current $i_{nq}$ input to an addition point, the q-axis output current target value $I_{nqref}$ is multiplied by a gain element kqr and input to the addition point, the q-axis output current target value $I_{nqref}$ is added to a d-axis system voltage $e_{od}$ also input to the addition point, and the d-axis system voltage $e_{od}$ is subtracted at the addition point and input to the compensator. Furthermore, the d-axis output current target value $I_{ndref}$ is subtracted from a d-axis inverter output current $i_{nd}$ input to the addition point, the d-axis output current target value $I_{ndref}$ is multiplied by a gain element kdr and input to the addition point, the current value input to the addition point is added to the q-axis system voltage $e_{oq}$ also input to the addition point, and the q-axis system voltage $e_{oq}$ is subtracted at the addition point and input to the compensator. Here, the q-axis output current target value $I_{nqref}$ and the d-axis output current target value $I_{ndref}$ correspond to an active output current target value and a reactive output current target value of the present invention, respectively.

Here, since it is during the interconnection operation, the d-axis system voltage $e_{od}$ and the q-axis system voltage $e_{oq}$ are input to the addition point, respectively. However, in the parallel operation during the self-sustaining operation, the d-axis output voltage target value $e_{odref}$ and the q-axis output voltage target value $e_{oqref}$ are input. Here, the d-axis output voltage target value $e_{odref}$ and the q-axis output voltage target value $e_{oqref}$ correspond to an active output voltage target value and a reactive output voltage target value of the present invention, respectively. The control system 140 corresponds to a reactive output voltage controller and an active output voltage controller of the present invention.

Here, the d-axis output voltage target value as an active component is adjusted by the q-axis output current as a reactive component, and the q-axis output voltage target value as a reactive component is adjusted by the d-axis output current as an active component.

As described above, by forming the drooping control into the current loop, the control system of the parallel operation control of the power conditioner during the self-sustaining operation and the current control during the interconnection operation can be shared.

Furthermore, in the control system 140, since the d-axis output current target value $I_{ndref}$ and the q-axis output current target value $I_{nqref}$ can be set, the cross current generally set to 0 during the parallel operation can be controlled to an arbitrary value. The parallel operation is generally performed by the same type of devices, but in the parallel operation of power conditioners having different capacities, when the cross current is set to zero, the large-capacity power conditioner has the same output power as the small-capacity power conditioner, and there is a problem that the large-capacity power conditioner cannot be effectively used. Furthermore, in the parallel operation of the storage power conditioners, when the cross current is set to zero, the same output power is obtained regardless of the charge amount of the storage battery, and there is also a problem that the operation time is limited by the storage battery having a small charge amount. In the control system 140 of the example, since the output current target value can be set for each of the power conditioners operated in parallel, the cross current can be controlled to an arbitrary value. Therefore, the large-capacity power conditioner can be effectively used in the parallel operation of the power conditioners having different capacities, and the operation time is not limited to the storage battery having a small charge amount even in the parallel operation of the storage power conditioners.

(Output impedance control)

Next, the output impedance control realized by the region 50 surrounded by a dotted line including the output impedance controller 30 in Figs. 1 and 2 will be described.

A configuration in which the output impedance is virtually changed in the control system during a parallel operation will be described.

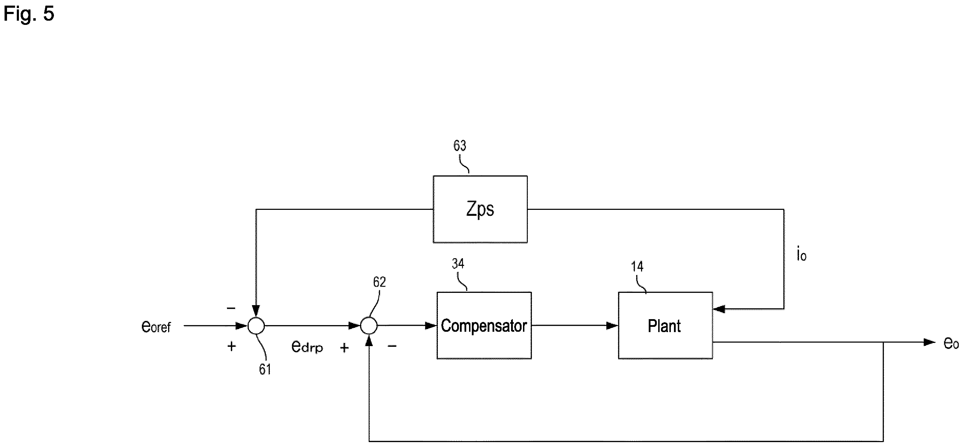

First, a control system having the configuration of Fig. 5 will be studied.

In the control system illustrated in Fig. 5, a fed back output current $i_o$ is input to a compensator Zps for changing the impedance. Then, at an addition point 61, an output of the compensator Zps is subtracted from an output voltage target value $e_{orf}$. At an addition point 62, a fed back output voltage eo is subtracted from $e_{drp}$ thus obtained and input to the compensator 34. Then, an output of the compensator 34 is input to a plant (here, the inverter 14). Accordingly, $e_{drp}$ is expressed by the following formula, and a drooping characteristic is given to a target value of the voltage control system.

[Mathematical formula 4]

$$e_{drp} = e_{oref} - Z_{ps} \cdot i_o$$

In a case where there is a voltage control system, transfer functions of the plant and the compensator are $G_{dv}$ and $C_{mp}$, respectively. Here, $G_{dv}$ is expressed by the following formula.

[Mathematical formula 5]

$$Gdv = \frac{1}{L \cdot C \cdot s^2 + C \cdot r \cdot s + 1}$$

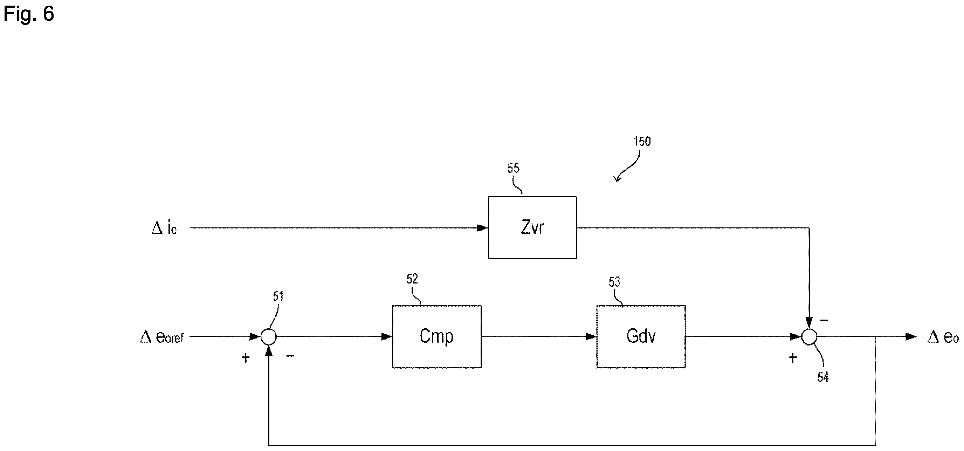

At this time, a block diagram of a control system 150 is illustrated in Fig. 6. Here, fed back $\Delta e_o$ is subtracted from $\Delta e_{oref}$ input to an addition point, and is input to the transfer function $C_{mp}$ representing the compensator and the transfer function $G_{dv}$ representing the plant. At an addition point on an output side of the transfer function $G_{dv}$, $\Delta e_o$ obtained by subtracting $\Delta i_o$ multiplied by a gain element $Z_{vr}$ from an output of the transfer function $G_{dv}$ is output.

According to Fig. 6, the following formulas are obtained:

[Mathematical formula 6]

$$\Delta e_o = \frac{Gdv \cdot C_{mp}}{1 + T_{vrv}} \cdot \Delta e_{oref} - \frac{Zvr}{1 + T_{vrv}} \cdot \Delta i_o$$

[Mathematical formula 7]

$$T_{vrv} = Gdv \cdot C_{mp}$$

Therefore, an output impedance $Z_{vrc}$ of the virtual impedance control with the control system is as follows:

[Mathematical formula 8]

$$Zvrc = \frac{Zvr}{1 + T_{vrv}}$$

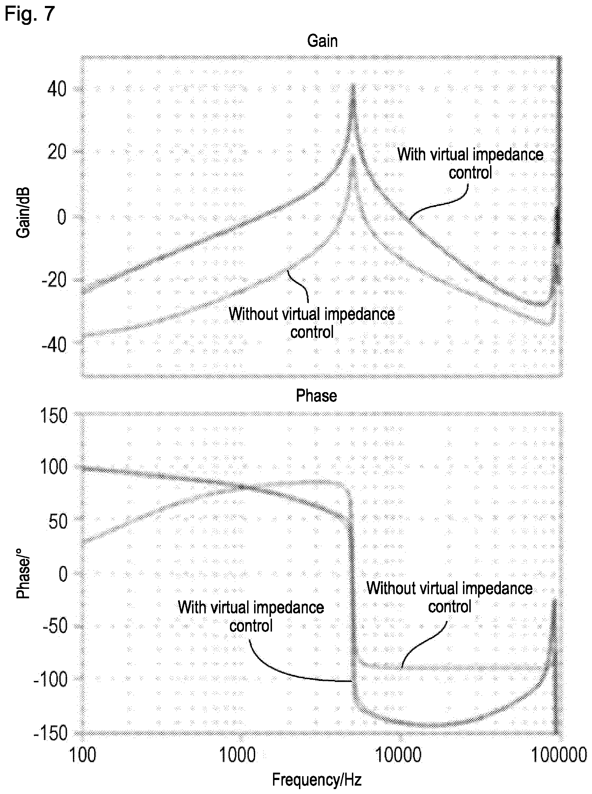

Fig. 7 illustrates simulation results of the output impedance with and without the virtual impedance control. It can be seen that the output impedance is increased by the virtual impedance control. By applying this virtual impedance control to the dq axis, the gain of the drooping control can be increased and the system can be stabilized.

As described above, since the power conditioner 1 performs the parallel operation control by the current feedback control without using the drooping control, there is no frequency change. Furthermore, since the current feedback control is used, the output current control during the interconnection operation and the parallel operation control during the self-sustaining operation can be realized by a common control system. As described above, by sharing the control system between the output current control during the interconnection operation and the parallel operation control during the self-sustaining operation, the control can be switched from the interconnection operation to the self-sustaining operation in an uninterrupted manner, and stable power supply can be performed without distinction between the self-sustaining operation and the interconnection operation.

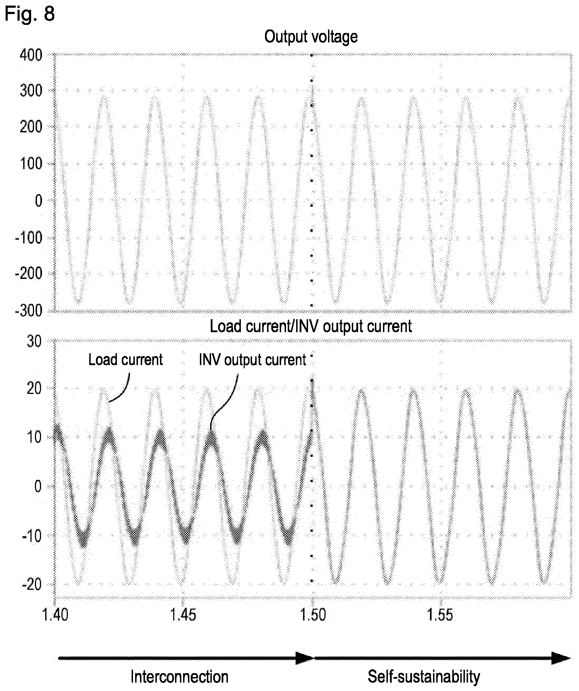

Fig. 8 illustrates a simulation result of double switching from the output current control to the self-sustaining operation in an uninterrupted manner in the case of one unit. A power failure occurred for 1.5 sec to perform an uninterrupted switching to an independent self-sustaining operation, control was performed with a current target value of a delay power factor of 0.8 at a peak of 10A before the power failure, and a resistance load was set to a peak of 20A after the power failure. Furthermore, a system frequency was set to 50.2 Hz before the power failure, and the operation was performed at a self-running frequency after the power failure. It can be seen from Fig. 8 that the operation is normal even after the uninterrupted switching.

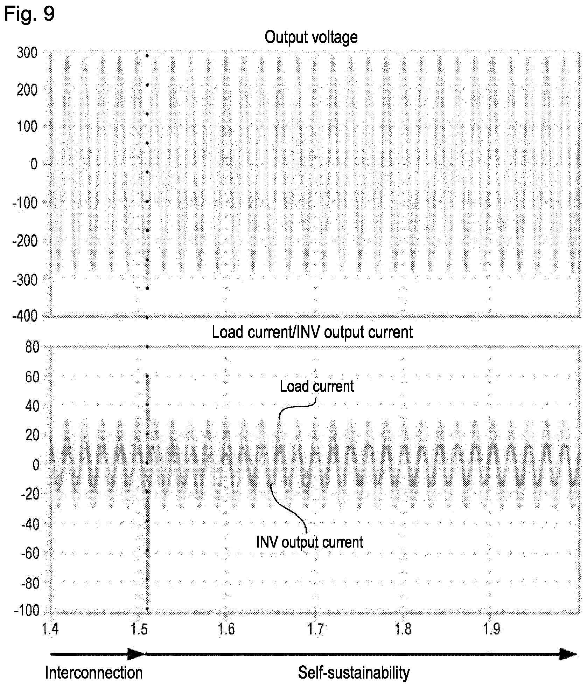

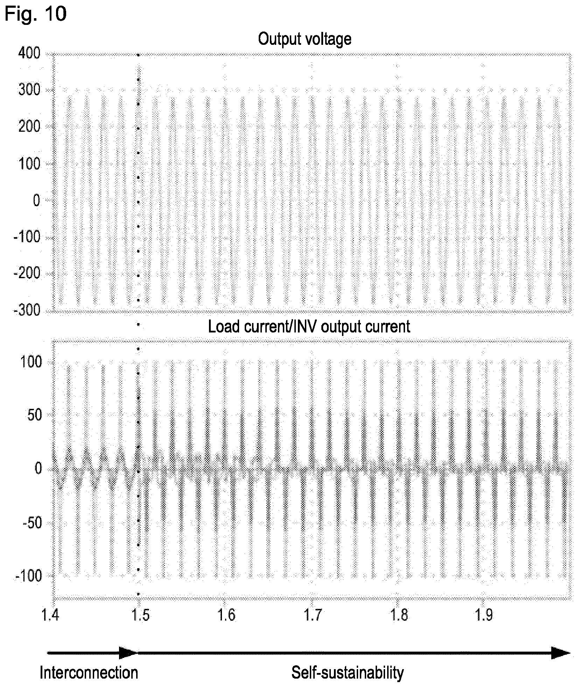

Fig. 9 illustrates a simulation result in the case of a resistive load with the uninterrupted switching to the two-unit parallel operation. Fig. 10 illustrates a simulation result in the case of a rectifier load with the uninterrupted switching to the two-unit parallel operation. In either case, there is waveform disturbance in a similar period that is considered to depend on the response time of the control system after switching, but it can be seen that the operation is normally performed even after the uninterrupted switching regardless of the load.

Although the power conditioner 1 as the power conversion device has been described in the above example, the configuration of the control system including the current feedback control and the virtual feedback control in the controller 20 can be similarly applied to the UPS as the power conversion device, and it is possible to switch in an uninterrupted manner from the normal operation in which power is supplied from the commercial power system to the load to the backup operation in which power is supplied from the storage battery 15 or the like in a case where a trouble such as a power failure occurs in the commercial power system, and stable power supply can be performed.

<Supplementary note 1>

A power conversion device (1) that converts input power into single-phase or three-phase AC power and outputs the converted power, the power conversion device including:

an active and reactive output current calculator (23A, 26A) configured to calculate an active output current value and a reactive output current value based on an output current value detected by a current detector (21);
an active and reactive output voltage value calculator (24A, 27A) configured to calculate an active output voltage value and a reactive output voltage value based on an output voltage value detected by a voltage detector (22);
a reactive output voltage controller (140) configured to adjust a reactive output voltage target value based on an active output current target value, the active output current value, and the reactive output voltage value; and
an active output voltage controller (140) configured to adjust an active output voltage target value based on a reactive output current target value, the reactive output current value, and the active output voltage value.

DESCRIPTION OF SYMBOLS

| | |
|---|---|
| 1 | power conditioner |
| 21 | power detector |
| 22 | voltage detector |
| 23A, 24A | Hilbert transformer |
| 23B, 24B $\alpha\beta$ | converter |
| 26A, 26B, 27A, 27B | $\alpha\beta$/dq converter |

**Claims**

1. A power conversion device that converts input power into single-phase or three-phase AC power and outputs the converted power, the power conversion device comprising:

   an active and reactive output current calculator configured to calculate an active output current value and a reactive output current value based on an output current value detected by a current detector;
   an active and reactive output voltage value calculator configured to calculate an active output voltage value and a reactive output voltage value based on an output voltage value detected by a voltage detector;
   a reactive output voltage controller configured to adjust a reactive output voltage target value based on an active output current target value, the active output current value, and the reactive output voltage value; and
   an active output voltage controller configured to adjust an active output voltage target value based on a reactive output current target value, the reactive output current value, and the active output voltage value.

2. The power conversion device according to claim 1, wherein at least one of the active output current target value and the reactive output current target value is changed between an interconnection operation in which the power conversion device is operated in connection with a commercial power system and a self-sustaining operation in which the power conversion device is operated in separation from the commercial power system.

3. The power conversion device according to claim 1, wherein at least one of the active output voltage target value and the reactive output voltage target value is changed between an interconnection operation in which the power conversion device is operated in connection with a commercial power system and a self-sustaining operation in which the power conversion device is operated in separation from the commercial power system.

4. The power conversion device according to any one of claims 1 to 3, further comprising an output impedance controller configured to control an output impedance when the power is output.

5. The power conversion device according to any one of claims 1 to 4, further comprising:

   a current rotational coordinate transformer configured to perform rotational coordinate transformation on the output current value to calculate the active output current value and the reactive output current value; and
   a voltage rotational coordinate transformer configured to perform rotational coordinate transformation on the output voltage value to calculate the active output voltage value and the reactive output voltage value.

Fig. 1

Fig. 2

EP 4 398 437 A1

Fig. 3

Fig. 4

Fig. 5

EP 4 398 437 A1

EP 4 398 437 A1

Fig. 6

Fig. 7

## Fig. 8

Output voltage

Load current/INV output current

Load current    INV output current

Interconnection          Self-sustainability

Fig. 9

Fig. 10

Output voltage

Load current/INV output current

Interconnection          Self-sustainability

<div align="center">**INTERNATIONAL SEARCH REPORT**</div>

| | International application No. |
|---|---|
| | **PCT/JP2022/013579** |

| **A.** | **CLASSIFICATION OF SUBJECT MATTER** |
|---|---|
| | *H02J 3/38*(2006.01)i; *H02M 7/48*(2007.01)i |
| | FI: H02M7/48 R; H02J3/38 130; H02J3/38 180 |

According to International Patent Classification (IPC) or to both national classification and IPC

| **B.** | **FIELDS SEARCHED** |
|---|---|

Minimum documentation searched (classification system followed by classification symbols)

H02J3/38; H02M7/48

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | JP 2018-129963 A (TOSHIBA CORP) 16 August 2018 (2018-08-16) entire text, all drawings | 1-5 |
| A | WO 2017/217013 A1 (PANASONIC IP MAN CO LTD) 21 December 2017 (2017-12-21) entire text, all drawings | 1-5 |
| A | JP 2014-230318 A (TABUCHI DENKI KK) 08 December 2014 (2014-12-08) entire text, all drawings | 1-5 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **10 May 2022** | **24 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/013579**

| Patent document cited in search report | | | Publication date (day/month/year) | Patent family member(s) | Publication date (day/month/year) |
|---|---|---|---|---|---|
| JP | 2018-129963 | A | 16 August 2018 | (Family: none) | |
| WO | 2017/217013 | A1 | 21 December 2017 | (Family: none) | |
| JP | 2014-230318 | A | 08 December 2014 | (Family: none) | |

Form PCT/ISA/210 (patent family annex) (January 2015)

**EP 4 398 437 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6809753 B